**Europäisches Patentamt**

**European Patent Office**

**Office européen des brevets**

(19)

(11) Numéro de publication : **0 376 774 B1**

(12)

# FASCICULE DE BREVET EUROPEEN

(45) Date de publication du fascicule du brevet :
**04.03.92 Bulletin 92/10**

(51) Int. Cl.⁵ : **C10G 27/04, B01J 37/10**

(21) Numéro de dépôt : **89403343.0**

(22) Date de dépôt : **01.12.89**

(54) **Procédé d'adoucissement en lit fixe de coupes pétrolières.**

(30) Priorité : **21.12.88 FR 8816907**

(43) Date de publication de la demande :
**04.07.90 Bulletin 90/27**

(45) Mention de la délivrance du brevet :
**04.03.92 Bulletin 92/10**

(84) Etats contractants désignés :
**AT BE DE ES GB IT LU NL**

(56) Documents cités :
**EP-A- 0 213 026**
**EP-A- 0 252 853**
**FR-A- 1 301 844**
**FR-A- 2 321 329**
**US-A- 4 207 173**
**US-A- 4 213 877**

(73) Titulaire : **Société Anonyme dite: COMPAGNIE DE RAFFINAGE ET DE DISTRIBUTION TOTAL FRANCE**
**84, rue de Villiers**
**F-92300 Levallois Perret (FR)**

(72) Inventeur : **Blondeau, René**
**10, rue Eugène Cotton**
**F-76610 Le Havre (FR)**
Inventeur : **Marty, Claude**
**66, rue Guillemard**
**F-76600 Le Havre (FR)**
Inventeur : **Ansquer, Patrick**
**Rue Félix Faure La Frenaye**
**F-76170 Lillebonne (FR)**

(74) Mandataire : **Jolly, Jean-Pierre et al**
**Cabinet Jolly 54, rue de Clichy**
**F-75009 Paris (FR)**

EP 0 376 774 B1

Jouve, 18, rue Saint-Denis, 75001 PARIS

## Description

La présente invention concerne l'adoucissement en lit fixe de coupes pétrolières, par oxydation catalytique en disulfures des mercaptans qu'elles contiennent.

Dans son principe, une telle oxydation peut être obtenue simplement en mélangeant la coupe pétrolière à traiter et une solution aqueuse d'une base alcaline, dans laquelle on ajoute un catalyseur à base d'un chélate métallique, en présence d'un agent oxydant. La coupe pétrolière et la solution aqueuse de la base alcaline ne sont pas miscibles et c'est à l'interface des deux phases liquides que les mercaptans sont convertis en disulfures (voir, à cet effet, le brevet français N° 1.249.134).

Avec des mercaptans difficilement oxydables, il est préférable de traiter la coupe pétrolière à l'aide d'un catalyseur supporté, en présence d'une base alcaline et d'un agent oxydant, et l'on désigne ce procédé par l'appellation de "procédé d'adoucissement en lit fixe".

L'agent oxydant, généralement de l'air, est mélangé à la coupe à adoucir; la base alcaline, habituellement une solution aqueuse de soude, est introduite soit en continu, soit par intermittence, dans le milieu réactionnel, pour maintenir les conditions alcalines nécessaires à la réaction d'oxydation. Le chélate métallique, utilisé comme catalyseur, est généralement une phtalocyanine métallique (voir, à cet effet, le brevet français N° 1.301.844).

Le support solide utilisé avec ce type de catalyseur présente un certain nombre de propriétés, en particulier en ce qui concerne la surface spécifique et le volume poreux; il doit également être insoluble dans la solution basique utilisée et être inerte vis-à-vis de la coupe pétrolière traitée.

Le support le plus fréquemment utilisé est du charbon actif, mais de très nombreux autres supports ont été proposés dans la technique (voir, à cet effet, les brevets français N° 2.202.726, 2 321 329, 2.524.818 ou le brevet européen N° 213 026 ou les brevets américains 3.396.123 et 4 213 877).

Les procédés d'adoucissement antérieurs nécessitent généralement l'utilisation d'une solution basique aqueuse, dont il convient de se débarrasser après usage, en raison, d'une part, des impuretés provenant de la charge et, d'autre part, de la concentration de la base, qui diminue par suite de l'apport d'eau amenée par la charge elle-même et par la réaction d'oxydation des mercaptans en disulfures, qui génère, in situ, une molécule d'eau par molécule de disulfure (voir les brevets français N° 2.347.433 et 2.338.322).

Pour répondre à ces impératifs, il est quelquefois possible de réutiliser, dans l'unité de dessalage du pétrole brut, les solutions aqueuses de soude devenues impropres à l'adoucissement des coupes pétrolières. Du sodium est malheureusement ainsi introduit dans le pétrole brut et l'on sait qu'il constitue un poison de la plupart des catalyseurs pétroliers et, notamment, des catalyseurs utilisés dans les unités de craquage catalytique.

Il a également été proposé (voir, à cet effet, les brevets français N° 2.343.043 ou 2.338.322 ou le brevet américain N° 4.207.173) de remplacer la soude aqueuse par des solvants organiques tels que des guanidines ou des composés d'ammonium quaternaires; toutefois, non seulement ces procédés sont coûteux, mais ils n'éliminent pas les inconvénients précédemment cités, en particulier du fait de la génération, pendant la réaction, d'une molécule d'eau par molécule de disulfure.

La présente invention vise à remédier à ces inconvénients en proposant un procédé d'adoucissement d'une coupe pétrolière, par oxydation catalytique des mercaptans, ne nécessitant pas l'utilisation d'une solution aqueuse de base minérale ou organique.

A cet effet, l'invention a pour objet un procédé d'adoucissement en lit fixe d'une coupe pétrolière par oxydation catalytique des mercaptans qu'elle contient, la réaction d'oxydation étant réalisée en l'absence de phase aqueuse et en présence d'un agent oxydant, éventuellement en combinaison avec une base non aqueuse, ce procédé étant caractérisé en ce que les molécules d'eau formées pendant ladite réaction d'oxydation sont ensuite enlevées du support catalytique par lavage périodique de celui-ci à l'aide d'une quantité substantielle d'un solvant polaire non aqueux et miscible à l'eau.

Ce solvant aura un paramètre de polarité supérieur à environ 35 dans l'échelle de DIMROTH (cf. Ann. 1963, 661,1). On peut citer, en particulier, les mono- et les dialcools primaires ou secondaires possédant un à cinq atomes de carbone, les cétones, certaines amines, les nitriles, le tétrahydrofuranne, la méthyléthylcétone, le diméthylsulfoxyde (DMSO) ou le diméthylformamide (DMF).

Afin de réaliser la réaction d'oxydation en l'absence de phase aqueuse, conformément à la présente invention, il est possible d'utiliser deux types de supports imprégnés de catalyseur à base de chélate métallique :

    – d'une part, les supports imprégnés de types classiques tels que, par exemple, les charbons actifs, en injectant avec la charge (en continu, ou en discontinu) de petites quantités de bases non aqueuses d'un type connu en soi telles que de l'ammoniac, des amines primaires, secondaires ou tertiaires, comme décrit, par exemple, dans les brevets américains N° 2.744.854, 2.988.500, ou 4.207.173;

    – d'autre part, selon un mode particulièrement avantageux de mise en oeuvre de la présente invention, des supports imprégnés possédant intrinsèquement des sites actifs liés à la présence de composés de type alcalin et/ou alcalino-terreux directement intégrés dans la matrice du support catalytique (voir, à cet effet, la demande de brevet européen N° 252.853 déposée par la Demanderesse).

Dans les deux cas, la réaction d'adoucissement des mercaptans conduira à la formation d'une molécule d'eau pour deux molécules de mercaptans, conformément au schéma réactionnel :

$$2R - SH + 1/2\ O_2 \rightarrow R - S - S - R + H_2O$$

dans lequel le symbole R représente un reste hydrocarboné. Les molécules d'eau ainsi générées dans les pores du support catalytique auront toujours plus ou moins tendance, suivant le type de support utilisé, à former in situ un milieu hétérogène qui, contrairement à ce qui est décrit dans l'art antérieur, diminuera le rendement de la réaction. Selon la présente invention, cette diminution du rendement pourra avantageusement être évitée par lavage périodique du support catalytique à l'aide d'une quantité substantielle d'un solvant polaire non aqueux et miscible à l'eau dans les conditions de la réaction.

Ce lavage pourra avantageusement être pratiqué en continu ou en discontinu avec une quantité substantielle d'un solvant dont la qualité première sera de ne pas dissoudre le catalyseur imprégnant le support.

Le lavage périodique avec un solvant polaire miscible à l'eau pourra être pratiquée de façon périodique, en procédant par exemple avec deux réacteurs fonctionnant en parallèle, par introduction dans le réacteur, après arrêt de la charge et éventuellement de la base anhydre, d'une quantité substantielle de solvant, généralement comprise entre 10 et 100% du volume du support. Parmi les solvants polaires susceptibles d'être choisis pour les lavages en discontinu, on utilisera des solvants choisis de préférence pour leur bonne miscibilité à l'eau en toutes proportions et pour leur inertie vis-à-vis du catalyseur imprégné, même à forte concentration. Dans ce but, on utilisera de préférence l'éthanol plutôt que le méthanol, dans la mesure où ce solvant peu coûteux ne dissout pas les catalyseurs tels que les phtalocyanines, même à forte concentration, et où il peut en outre être facilement redistillé après utilisation.

Le lavage périodique pourra également et avantageusement être pratiqué sans arrêt de la réaction d'adoucissement, par injection périodique dans la charge d'une quantité substantielle (c'est-à-dire, en général, comprise entre 10 et 100% et, de préférence, entre 10 et 30% du volume du support catalytique) d'un solvant polaire miscible à l'eau dans les conditions de la réaction. Selon ce mode de lavage, le rapport volumique entre le solvant polaire et la charge sera avantageusement compris entre 10 et 100% et, de préférence, entre 30 et 60%. Parmi les solvants polaires utilisés de préférence, on choisira des solvants polaires miscibles dans la charge d'hydrocarbure et ne risquant pas de démixer avec la phase aqueuse dans les conditions du lavage. Pour ce type de lavage périodique, le solvant polaire présentant les meilleures qualités de lavage au prix le plus bas pourra être avantageusement le méthanol.

Le procédé conforme à l'invention est bien adapté à l'adoucissement de toutes les coupes pétrolières et, en particulier, à l'adoucissement des essences et des kérosènes. En effet, ces coupes pétrolières ne contiennent que très peu d'eau (teneur en eau généralement très inférieure à 500 p.p.m.) et, par conséquent, ce seront surtout les molécules d'eau générée in situ lors de la réaction d'oxydation qui seront susceptible d'être retenues par le support catalytique. Il n'est donc pas nécessaire de procéder trop fréquemment, à la désorption des molécules d'eau par lavage à l'aide d'un solvant polaire, conformément à la présente invention.

Les conditions de la réaction d'adoucissement des charges pétrolières sans phase aqueuse sont globalement les mêmes que les conditions réactionnelles de l'adoucissement des mercaptans décrites dans l'art antérieur. Ces conditions réactionnelles pourront, par exemple, être les suivantes:

```
- température:                        20 à 60°C,
- pression:                          10^5 à 30.10^5 Pascals,
- quantité d'agent oxydant (air):     1 à  3
- vitesse spatiale horaire
  (volume de charge par volume
  de catalyseur et par heure):     0,25 à 6.
```

Dès que la teneur en mercaptans de la charge ainsi traitée dépasse une valeur de consigne (généralement comprise entre 10 et 30 p.p.m.), on procède à la réactivation du catalyseur par lavage en continu ou en discontinu avec un solvant polaire, dans les conditions suivantes:

3

EP 0 376 774 B1

| | |
|---|---|
| - température: | 10 à 90°C |
| - pression: | $10^5$ à $30.10^5$ Pascals, |
| - vitesse spatiale horaire: | 0,1 à 5, |
| - rapport volume du solvant sur volume de support: | 0,1 à 1, |
| - fréquence de telles régérération: | 3 à 10 semaines, |

selon la nature du support et la nature de la charge, en particulier suivant sa teneur initiale en eau et en mercaptans.

Comme chélate métallique, on pourra déposer sur le catalyseur tout chélate utilisé dans ce but dans la technique antérieure, en particulier les phtalocyanines d'un métal et, notamment, la phtalocyanine de cobalt. Cette phtalocyanine sera déposée sur un support contenant 5 à 100% de carbone.

Un tel support pourra donc être constitué de charbon actif d'un type connu en soi. Dans ce cas, la base nécessaire à la réaction d'adoucissement devra être non aqueuse et soluble dans la charge à traiter, et être injectée en continu ou en discontinu avec celle-ci.

Toutefois, selon un mode préféré de mise en oeuvre de la présente invention, le support catalytique pourra être, avantageusement, un composite résultant du mélange intime d'un composé carboné et d'aluminosilicates contenant en particulier des quantités substantielles de composés alcalins ou alcalino-terreux tels que les sels de potassium ou de sodium insolubles dans l'eau, dont la présence permettra d'éviter l'injection d'une base non aqueuse dans la charge à traiter (voir, à cet effet, la demande de brevet européen N° 252.853). Les avantages de la présente invention apparaîtront alors de façon d'autant plus évidentes que ce type de support possède une tendance intrinsèque à piéger les molécules d'eau apportées par la charge ou formées pendant la réaction.

Les dessins schématiques annexés, qui n'ont aucun caractère limitatif, illustrent des formes de mise en oeuvre du procédé conformes à l'invention. Sur ces dessins:

La figure 1 est un schéma illustrant une forme de mise en oeuvre en continu du procédé conforme à l'invention;

La figure 2 est un schéma illustrant une forme de mise en oeuvre discontinue du procédé de l'invention, avec deux réacteurs en parallèle.

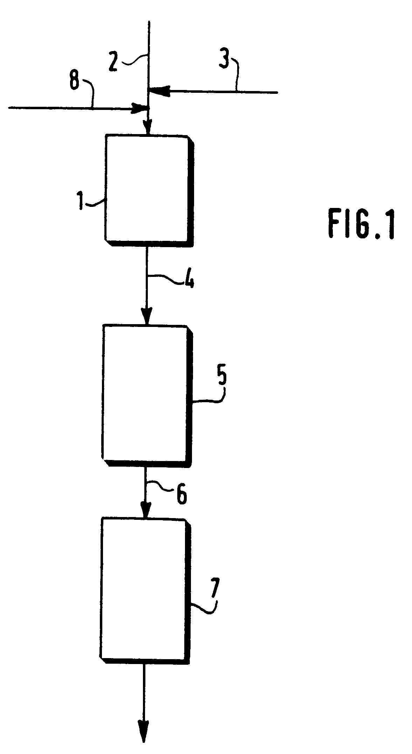

Dans le cas de la figure 1, l'alimentation du réacteur 1 en coupe pétrolière à adoucir, éventuellement en combinaison avec une base non aqueuse, s'effectue par la ligne 2, dans laquelle l'agent oxydant, de l'air par exemple, est introduit directement par la ligne 3. La coupe pétrolière traitée est évacuée par la ligne 4, qui alimente un système de filtre 5 à base de charbon actif, d'argile, de sable ou autre, destiné à éliminer les traces d'eau et le soufre naissant souvent produits au cours de l'oxydation des mercaptans, et non retenus par le support. La charge traitée est ensuite transférée par la ligne 6 à une enceinte de stockage 7.

Dès que la teneur en mercaptans des effluents de la réaction d'adoucissement, mesurée dans la ligne 4 ou en aval de celle-ci, dépasse la valeur de consigne, généralement de l'ordre de 10 p.p.m. de mercaptans, on procède conformément à la présente invention à l'injection en continu dans la ligne 2, par la ligne 8, d'une quantité substantielle d'un solvant polaire miscible à l'eau et à la charge.

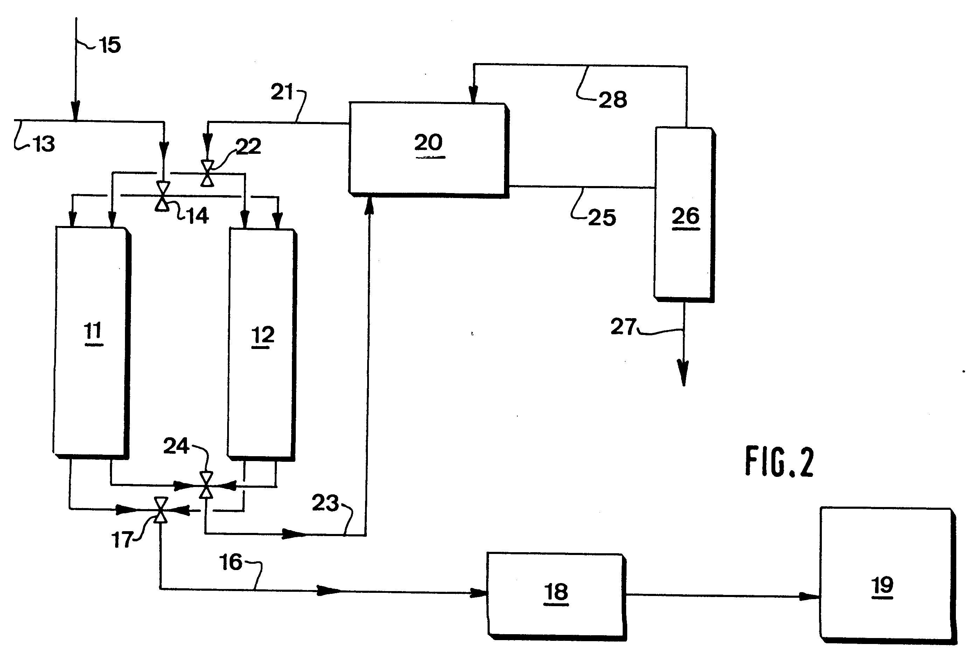

Selon la figure 2, l'alimentation des réacteurs 11 et 12 en coupe pétrolière à adoucir, éventuellement en combinaison avec une base non aqueuse, s'effectue par la ligne 13, une vanne 14 permettant d'alimenter l'un ou l'autre des réacteurs. L'agent oxydant, de l'air par exemple, est introduit directement par la ligne 15 dans la ligne 13, en amont de la vanne 14.

La coupe pétrolière ainsi traitée est évacuée par une ligne 16, qu'une vanne 17 permet de connecter à volonté à celui des réacteurs 11 et 12 où s'effectue l'adoucissement.

La ligne d'évacuation 16 alimente un système de filtre 18 à base de charbon actif, d'argile, de sable ou autre, destiné à éliminer les traces d'eau et le soufre naissant, la chargé traitée étant enfin stockée dans une enceinte 19.

La réactivation du catalyseur s'effectue par lavage dans les réacteurs 11 ou 12, à partir d'un réservoir 20, alimentant en solvant polaire non aqueux l'un ou l'autre des réacteurs au moyen d'une ligne 21 équipée d'une vanne 22. Le solvant est ensuite récupéré à la base des réacteurs par une ligne 23, connectée par une vanne 24 à celui des réacteurs qui est en cours de régénération, et il est recyclé au réservoir 20.

4

Périodiquement, le solvant du réservoir 20 est séparé de l'eau qu'il contient, en envoyant un solvant par une ligne 25 dans une colonne de distillation 26, à la base de laquelle l'eau est évacuée en 27, tandis que le solvant deshydraté est récupéré en tête par la ligne 28 et recyclé au réservoir 20.

Les schémas représentés sur les figures 1 et 2 sont donc particulièrement faciles à mettre en oeuvre, puisqu'ils éliminent les systèmes coûteux d'introduction d'une solution aqueuse de soude, ainsi que les systèmes de séparation et d'évacuation de celle-ci.

Ainsi que le montreront les exemples ci-après, qui n'ont pas de caractère limitatif, la mise en oeuvre du procédé selon l'invention se révèle en outre particulièrement efficace dans l'adoucissement des coupes pétrolières, même de celles réputées difficiles à traiter, et le catalyseur employé présente une stabilité dans le temps très supérieure à celle des catalyseurs d'adoucissement de type connu.

EXEMPLE 1

Le catalyseur composite utilisé dans cet exemple a été préparé comme décrit dans la demande de brevet européen N° 252.853, précédemment citée. Après imprégnation du support avec une phtalocyanine de cobalt sulfonée du type commercialisé par la Société Française PROCATALYSE sous l'appellation "LCPS", ce catalyseur se présente sous la forme d'un granulat qui, après séchage, contient principalement:
– environ 1,5 kg de chélate par $m^3$ de support,
– un support minéral contenant environ :
    . 10% en poids de carbone,
    . 20% en poids de silicium,
    . 8 à 9% en poids de sels de potassium sous forme de sels insolubles.
Le granulat a une surface spécifique d'environ 50 $m^2$/gramme.

On place le composite directement dans un réacteur, dont le rapport de la hauteur au diamètre est ici d'environ 5; on s'assure ensuite du séchage complet du composite par nettoyage de celui-ci, par exemple à l'alcool éthylique, en faisant passer à température ambiante, sur le lit fixe de catalyseur, un volume égal d'éthanol industriel, avec une vitesse spatiale horaire de 1 v.v.h.

Deux charges $C_1$ et $C_2$ sont alors traitées dans le réacteur:
– la charge $C_1$ est une charge très difficile à raffiner, constituée de pétrole lampant d'Irak, contenant 300 p.p.m. de mercaptans;
– la charge $C_2$ est une charge plus classique, moins difficile à raffiner que la précédente, constituée de pétrole lampant d'Iran, contenant 150 p.p.m. de mercaptans.
Ces charges présentent les caractéristiques suivantes:

|  | $C_1$ | $C_2$ |
|---|---|---|
| - composés aromatiques (% en volume): | 17 | 18 |
| - oléfines (% en volume): | inf. à 5 | inf. à 5 |
| - hydrocarbures saturés (% en volume): | 76 | 75 |
| - teneur en mercaptans (p.p.m en volume) | 300 | 150 |
| - teneur en eau (p.p.m. en poids): | inf. à 150 | inf. à 150 |

On utilise de l'air comme agent oxydant.
Aucune solution aqueuse n'est employée. Les conditions opératoires sont les suivantes:

```
- température:        40°C,
- pression:          20 bar,
- débit d'air:        2 normaux litres par gramme de
                      soufre,
- vitesse spatiale
  horaire de charge :0,7 v.v.h.
      (volume  de  charge  par  volume  de  catalyseur  et  par
heure).
```

La teneur en mercaptans de la charge traitée, après adoucissement dans ces conditions, est inférieure à 10 p.p.m., tant pour la charge $C_1$ que pour la charge $C_2$.

On constate que l'activité du catalyseur diminue très lentement dans le temps, puisqu'au bout de 3 semaines d'utilisation en continu avec la charge $C_1$, la teneur en mercaptans de la charge adoucie est seulement d'environ 15 p.p.m.

Après arrêt de l'introduction de la charge et de l'oxygène, on procède alors à la réactivation du catalyseur, par lavage avec de l'éthanol industriel (à une concentration de 90 à 95%), dans les conditions suivantes:

```
- température:              40°C,
- pression:                20 bar,
- quantité de
  l'éthanol industriel:    100% en volume du support,
- durée de
  l'injection d'éthanol:   10 minutes.
```

On recommence l'opération d'adoucissement et l'on constate que la teneur en mercaptans de la charge traitée redevient à nouveau inférieure à 10 p.p.m. pour les deux types de charge. On répète cette opération de réaction/réactivation du catalyseur autant de fois que nécessaire.

A titre de variante, il est possible, également, de procéder à la réactivation du catalyseur sans arrêter l'introduction de la charge et de l'agent oxydant. Pour ce faire, on procède de préférence à une injection dans la charge de 12% en volume de méthanol à 40°C par rapport au volume de support, cette addition se faisant en environ 15 minutes.

EXEMPLE 2

Dans cet exemple, on procède à l'adoucissement d'une charge de kérosène de type Irak, à l'aide d'un catalyseur déposé sur un lit fixe de charbon actif. La réaction est effectuée en présence d'oxygène, avec, cette fois, injection en continu d'une base de Lewis non aqueuse, constituée ici par de l'hydroxyde de tétrabutyle ammonium (TBAH).

La phtalocyanine de même provenance que celle de l'exemple 1 est imprégnée de façon connue en soi sur un charbon actif fourni par la Société Américaine NORIT.

Le composite contient environ 10 kg de matière active par $m^3$ de charbon actif.

Comme dans l'exemple 1, on s'assure du séchage complet du lit fixe de catalyseur par lavage dans des conditions identiques à celles de l'exemple 1.

Les conditions opératoires sont alors les suivantes:

- température:                            40°C,
- pression:                              20 bar,
- débit d'air:                            2 normaux litres
                                            par gramme de soufre,

- vitesse spatiale
  horaire de la charge:                  0,7 v.v.h.

La quantité de TBAH (environ 6 p.p.m.) injectée avec la charge étant très faible, il n'est pas nécessaire de l'éliminer après réaction.

Comme dans l'exemple précédent, le kérosène ainsi traité possède en début de cycle une teneur en mercaptans inférieure à 10 p.p.m.. Dès que cette teneur tend à dépasser une limite d'environ 15 p.p.m., ce qui se produit au bout de 3 à 4 semaines environ, on procède à la réactivation du catalyseur conformément à la présente invention, dans les mêmes conditions que celles décrites dans l'exemple 1, à savoir:

– lorsque l'on procède avec arrêt de la charge, par l'injection d'un demi-volume d'éthanol industriel par rapport au support catalytique,

– lorsque l'on procède sans arrêt à la charge, par injection dans celle-ci d'environ 1/6 du volume du support de méthanol industriel à une concentration d'environ 55% par rapport à la charge. Après concentration, la teneur en mercaptans de la charge traitée revient à sa valeur initiale.


## Revendications

1. Procédé d'adoucissement d'une coupe pétrolière par oxydation catalytique en lit fixe des mercaptans qu'elle contient, la réaction d'oxydation étant réalisée en l'absence de phase aqueuse et en présence d'un agent oxydant, éventuellement en combinaison avec une base non aqueuse, ce procédé étant caractérisé en ce que les molécules d'eau formées pendant ladite réaction d'oxydation sont enlevées du support catalytique par lavage périodique de celui-ci à l'aide d'une quantité substantielle d'un solvant polaire non aqueux et miscible à l'eau.

2. Procédé selon la revendication 1, caractérisé en ce que le solvant polaire miscible à l'eau possède un paramètre de polarité supérieur à environ 35 dans l'échelle de DIMROTH.

3. Procédé selon l'une des revendications 1 ou 2, caractérisé en ce que le solvant polaire est un mono- ou di- alcool primaire ou secondaire possédant un à cinq atomes de carbone, une cétone, une amine, un nitrile, le tétrahydrofuranne, la méthyléthylcétone, le diméthylsulfoxyde (DMSO) ou le diméthylformamide (DMF).

4. Procédé selon l'une des revendications 1 à 3, caractérisé en ce que le lavage périodique du support est réalisé à l'aide d'une quantité de solvant polaire supérieure à 10% dit volume du support.

5. Procédé selon la revendication 4, caractérisé en ce que le lavage est réalisé par introduction en continu dans la charge d'une quantité comprise entre 10 et 100% et, de préférence entre 30 et 60%, en volume de solvant polaire par rapport à la charge.

6. Procédé selon la revendication 5, caractérisé en ce que le solvant polaire miscible à l'eau et miscible dans la charge est le méthanol.

7. Procédé selon la revendication 4, caractérisé en ce que le lavage du support est réalisé par arrêt de la charge à traiter et par introduction d'une quantité en volume de solvant polaire supérieur à 10% du volume du support.

8. Procédé selon la revendication 7, caractérisé en ce que le solvant polaire miscible à l'eau est l'éthanol.

9. Procédé selon l'une des revendications 1 à 8, caractérisé en ce que le lavage périodique est réalisé toutes les 3 à 10 semaines.

10. Procédé selon l'une des revendications 1 à 9, caractérisé en ce que le lavage périodique est réalisé à une température comprise entre 10 et 90°C, et à une vitesse spatiale horaire comprise entre 0,1 et 5 v.v.h..

11. Procédé selon l'une des revendications 1 à 10, caractérisé en ce que la réaction d'oxydation est mise en oeuvre à une température comprise entre 20 et 60°C, à une pression comprise entre $1 \cdot 10^5$ et $30 \cdot 10^5$ Pascals et à une vitesse spatiale horaire comprise entre 0,25 et 6 v.v.h..

12. Procédé selon la revendication 11, caractérisé en ce que le support catalytique comprend 5 à 100% en poids de carbone, sur lequel est déposé un chélate métallique.

13. Procédé selon la revendication 12, caractérisé en ce que le chélate métallique est une phtalocyanine de cobalt.

14. Procédé selon la revendication 13, caractérisé en ce que le support contient des composés alcalins et/ou alcalino-terreux.

## Patentansprüche

1. Festbettverfahren zum Süßen einer Erdölfraktion durch katalytische Oxidation der enthaltenen Mercaptane, wobei die Oxidationsreaktion in Abwesenheit einer wäßrigen Phase und in Gegenwart eines Oxidationsmittels, gegebenenfalls in Kombination mit einer nicht-wäßrigen Base, dadurch gekennzeichnet, daß die während der Oxidationsreaktion gebildeten Wassermoleküle durch periodisches Waschen des katalytischen Trägers mit einer ausreichenden Menge eines polaren, nicht-wäßrigen und mit Wasser mischbaren Lösungsmittels entfernt werden.

2. Verfahren nach Anspruch 1, dadurch gekennzeichnet, daß das polare, mit Wasser mischbare Lösungsmittel einen Polaritätsparameter von über etwa 35 in der DIMROTH-Skala besitzt.

3. Verfahren nach Anspruch 1 oder 2, dadurch gekennzeichnet, daß das polare Lösungsmittel ein primärer oder sekundärer mono- oder Dialkohol mit mit 1 bis 5 Kohlenstoffatomen, ein Keton, ein Amin, ein Nitril, Tetrahydrofuran, Methylethylketon, Dimethylsulfoxid (DMSO) oder Dimethylformamid (DMF) ist.

4. Verfahren nach einem der Ansprüche 1 bis 3, dadurch gekennzeichnet, daß das periodische Waschen des Trägers mit einer um 10% größeren Menge als das Volumen des Trägers beträgt, des polaren Lösungsmittels durchgeführt wird.

5. Verfahren nach Anspruch 4, dadurch gekennzeichnet, daß das Waschen durch kontinuierliches Einführen in die Beladung einer Menge zwischen 10 und 100%, und vorzugsweise zwischen 30 und 60 Vol.-%, des polaren Lösungsmittels in bezug auf die Beladung durchgeführt wird.

6. Verfahren nach Anspruch 5, dadurch gekennzeichnet, daß das mit Wasser und der Beladung mischbare Lösungsmittel Methanol ist.

7. Verfahren nach Anspruch 4, dadurch gekennzeichnet, daß das Waschen des Trägers durch Halten der zu behandelnden Charge und durch Einführen einer über 10 Vol.-% des Trägers liegenden Menge des polaren Lösungsmittels durchgeführt wird.

8. Verfahren nach Anspruch 7, dadurch gekennzeichnet, daß das mit Wasser mischbare polare Lösungsmittel Ethanol ist.

9. Verfahren nach einem der Ansprüche 1 bis 8, dadurch gekennzeichnet, daß das periodische Waschen alle 3 bis 10 Wochen durchgeführt wird.

10. Verfahren nach einem der Ansprüche 1 bis 9, dadurch gekennzeichnet, daß das periodische Waschen bei einer Temperatur zwischen 10 und 90°C mit einer Raumgeschwindigkeit pro Stunde von 0,1 bis 5 vvh durchgeführt wird.

11. Verfahren nach einem der Ansprüche 1 bis 10, dadurch gekennzeichnet, daß die Oxidationsreaktion bei einer Temperatur von 20 bis 60°C, bei einem Druck von $1.10^5$ nach $30.10^5$ Pascal und einer Raumgeschwindigkeit pro Stunde zwischen 0,25 und 6 vvh durchgeführt wird.

12. Verfahren nach Anspruch 11, dadurch gekennzeichnet, daß der katalytische Träger 5 bis 100 Gew.-% Kohlenstoff enthält, auf welchem ein Metallchelat abgeschieden ist.

13. Verfahren nach Anspruch 12, dadurch gekennzeichnet, daß der Metallchelat ein Kobaltphthalocyanin ist.

14. Verfahren nach Anspruch 13, dadurch gekennzeichnet, daß der Träger Alkali- und/oder Erdalkaliverbindungen enthält.

## Claims

1. A process for sweetening a petroleum fraction by catalytic oxidation, in a fixed bed, of the mercaptans contained therein, the oxidation reaction being carried out in the absence of an aqueous phase and in the presence of an oxidising agent, optionally in combination with a non-aqueous base, said process being characterised in that the molecules of water formed during said oxidation reaction are removed from the catalytic support by periodic washing of the latter using a substantial quantity of a non-aqueous polar solvent miscible in water.

2. A process according to claim 1, characterised in that the polar water-miscible solvent has a polarity parameter higher than about 35 on the DIMROTH scale.

3. A process according to either of claims 1 or 2, characterised in that the polar solvent is a primary or secondary mono or dialcohol having one to five carbon atoms, a ketone, an amine, a nitrile, tetrahydrofuran, methyl ethyl ketone, dimethyl sulphoxide (DMSO) or dimethyl formamide (DMF).

4. A process according to any one of claims 1 to 3, characterised in that the periodic washing of the support is carried out using a quantity of a polar solvent which is greater than 10 % of the volume of the support.

5. A process according to claim 4, characterised in that the washing is carried out by continuously introducing into the charge a quantity of between 10 and 100 % and, preferably between 30 and 60 %, by volume of polar solvent in relation to the charge.

6. A process according to claim 5, characterised in that the polar solvent, which is miscible in water and miscible in the charge, is methanol.

7. A process according to claim 4, characterised in that the washing of the support is carried out by stopping the charge to be treated and by introducing a quantity by volume of polar solvent which is greater than 10 % of the volume of the support.

8. A process according to claim 7, characterised in that the polar water-miscible solvent is ethanol.

9. A process according to any one of claims 1 to 8, characterised in that the periodic washing is carried out every 3 to 10 weeks.

10. A process according to any one of claims 1 to 9, characterised in that the periodic washing is carried out at a temperature of between 10 and 90°C, and at an hourly spatial velocity of between 0.1 and 5 v.v.h.

11. A process according to any one of claims 1 to 10, characterised in that the oxidation reaction is carried out at a temperature of between 20 and 60°C, at a pressure of between $1.10^5$ and $30.10^5$ pascals and at an hourly spatial velocity of between 0.25 and 6 v.v.h.

12. A process according to claim 11, characterised in that the catalytic support comprises 5 to 100 % by weight of carbon, on which a metallic chelate is deposited.

13. A process according to claim 12, characterised in that the metallic chelate is a cobalt phthalocyanine.

14. A process according to claim 13, characterised in that the support contains alkaline and/or alkaline earth compounds.

FIG.1

FIG.2